# FASCICULE DE BREVET EUROPEEN

(11) **EP 0 419 646 B1**
(45) Date de publication et mention de la délivrance du brevet: **07.07.1993**
(21) Numéro de dépôt: 90907107.8
(22) Date de dépôt: 05.04.1990
(51) Int. Cl.: G01B 5/24, B62D 17/00

(54) **DISPOSITIF DE REGLAGE DE LA GEOMETRIE D'UNE ROUE DE VEHICULE**
VORRICHTUNG ZUR EINSTELLUNG DER GEOMETRIE EINES KRAFTFAHRZEUGRADES
DEVICE FOR ADJUSTING THE GEOMETRY OF A VEHICLE WHEEL

(30) Priorité: 06.04.1989 FR 8904553
(43) Date de publication de la demande: 03.04.1991
(73) Titulaire: ELF ANTAR FRANCE, 92400 Courbevoie (FR)
(72) Inventeur: FAYARD, Jean-Claude, F-69003 Lyon (FR); TIMONEY, Charles, F-78620 L'Etang-la-Ville (FR)
(74) Mandataire: Timoney, Ian Charles Craig
(86) Numéro de dépôt international: FR9000238
(87) Numéro de publication internationale: WO9012273

(56) Documents cités:
- DE-A- 2 535 670
- DE-A- 3 714 689
- US-A- 4 026 578
- "Automotive Mechanics", McGraw-Hill, page 517

## Description

La présente invention concerne un dispositif de réglage de la géométrie d'une roue de véhicule.

Dans un véhicule moderne, qu'il s'agisse de voiture de série ou de voiture de course, la géométrie des roues du véhicule joue un rôle important dans les caractéristiques de conduite et tenue de route. Le terme géométrie couvre les trois principales caractéristiques d'une roue suspendue d'un véhicule : rayon de braquage, angle de carrossage et angle de chasse.

En ce qui concerne l'angle de carrossage des roues, sur les plupart des véhicules cet angle est, soit nul, soit toujours très faible et choisi positif ou négatif. Pour fixer les idées nous rappelons que l'angle de carrossage est l'angle aigu que fait une verticale avec le plan médian de la roue. Cet angle est dit négatif lorsque l'axe de la roue par rapport à la verticale rentre à l'intérieur. Cet angle est dit positif quand à l'inverse l'axe de la roue s'éloigne de la verticale. L'angle de chasse est l'angle que fait l'axe de pivotement de la fusée d'une roue avec une verticale. Si la trace de l'axe de pivotement sur le plan d'appui est située en avant du centre de la surface de contact du pneumatique, on dit qu'il y a chasse positive. Dans le cas contraire, il y a chasse négative. Dans les véhicule de l'art antérieur on cherche le meilleur compromis entre l'angle de carrossage et l'angle de chasse. Ce compromis doit permettre de minimiser les inconvénients tels qu'une usure anormale des pneumatiques, l'instabilité du véhicule, le désagrément de conduite ou les effets de réaction dans le volant. Ainsi en général l'angle de carrossage est positif pour les voitures particulières et négatifs sur les voitures de sport ou de course.

Le document US-A-4026578 décrit un dispositif de réglage du parallélisme des roues avant d'une voiture dans lequel l'extrémité inférieure d'un élément de suspension est montée sur un bras de direction par l'intermédiaire d'un excentrique. La page 517 du livre "Automotive Mechanics" publié chez McGraw-Hill présente aussi un moyen de faire varier le rayon de braquage et l'angle de carrossage de la roue d'un véhicule. Dans ces deux documents, une fois que le réglage a été effectué, les éléments sont maintenus dans la position choisie par des vis. Ces dispositifs ne permettent donc pas de régler, de manière continue, la géométrie d'une roue de véhicule.

La présente invention a donc pour but de proposer un dispositif de réglage de manière continue de la géométrie d'une roue de véhicule (pendant la marche du véhicule) qui est de construction simple et de fiabilité accrue.

Pour ce faire, l'invention propose un dispositif de réglage de la géométrie d'une roue de véhicule comprenant un porte-moyeu destiné à recevoir en rotation la roue, le porte-moyeu étant monté sur le véhicule par l'intermédiaire d'au moins un élément de suspension qui est libre de pivoter par rapport au véhicule caractérisé en ce que, afin de pouvoir varier le rayon de braquage de la roue, l'axe de l'excentrique est disposé verticalement et est susceptible d'être mis en rotation de manière continue pendant le déplacement du véhicule.

Selon un deuxième aspect, l'invention propose un dispositif de réglage de la géométrie d'une roue de véhicule comprenant un porte-moyeu destiné à recevoir en rotation la roue, le porte-moyeu étant monté sur le véhicule par l'intermédiaire de deux éléments de suspension qui sont libres de pivoter par rapport au véhicule caractérisé en ce que, afin de pouvoir varier au moins deux paramètres de la géométrie soit séparément, soit en combinaison, les axes des excentriques sont disposés verticalement et sont susceptibles d'être mis en rotation de manière continue pendant le déplacement du véhicule.

D'autres caractéristiques et avantages de la présente invention apparaîtront plus clairement à la lecture de la description suivante, faite en référence aux dessins annexés sur lesquels :
- la figure 1 est une vue schématique du train de suspension d'un véhicule équipé du dispositif selon l'invention ;
- la figure 2 est une vue analogue à celle de la figure 1 mais montrant un léger angle de braquage de la roue ;
- la figure 3 est une vue schématique du train arrière d'un véhicule équipé de dispositifs permettant de varier le rayon de braquage et l'angle de carrossage ;
- les figures 4 et 5 sont deux vues schématiques analogues à celles des figures 1 et 2 mais montrant un dispositif selon un deuxième mode de réalisation de l'invention ; et
- les figures 6 et 7 sont deux représentations schématiques du train de suspension selon l'invention.

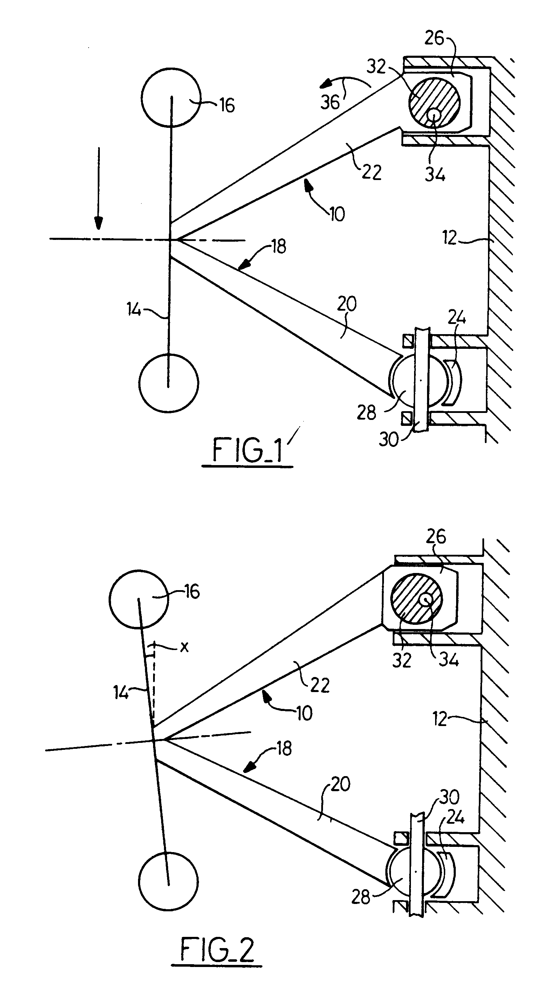

Comme représenté sur la figure 1 le train de suspension 10 qui, dans l'exemple illustré est le train arrière d'un véhicule, dont le châssis 12 est représenté partiellement, comporte une roue 14 munie d'un pneu 16. La roue 14 est montée en rotation sur un triangle de suspension 18 par l'intermédiaire d'un porte-moyeu (non-représenté). Le triangle de suspension 18 comprend deux bras 20 et 22, dont les extrémités libres 24 et 26 sont montées sur le châssis 12. L'extrémité 24 du bras 20 est montée à pivotement sur une rotule 28 qui, elle-même, est montée sur un axe 30 logé dans la châssis 12 du véhicule.

L'extrémité 26 du bras 22 est montée à pivotement sur la châssis 12 du véhicule par l'intermédiaire d'un roulement excentrique 32. Dans un mode de réalisation préféré, le roulement excentrique comprend une rotule excentrique 32 qui est montée fixe sur un axe 34 logé dans le châssis 12 du véhicule. Quand on désire faire tourner le plan de la roue 14, l'axe 34 est mis en rotation, par exemple dans le sens inverse des aiguilles d'une montre (en regardant le dessin), ce qui entraîne la rotation de la rotule 32. L'excentricité de la rotule 32 provoque le déplacement de l'extrémité 26 du bras 22 qui décrit un arc comme représenté par la flèche 36. Après que l'axe 34 et la rotule 32 ont tourné d'un angle de 90°, le train de suspension 10 se trouve dans la position représentée sur la figure 2.

Comme on le voit sur la figure 2, le triangle de suspension 18 a tourné sur la rotule 28 et le plan de la roue 14 fait un angle x par rapport au plan de la roue de la figure 1.

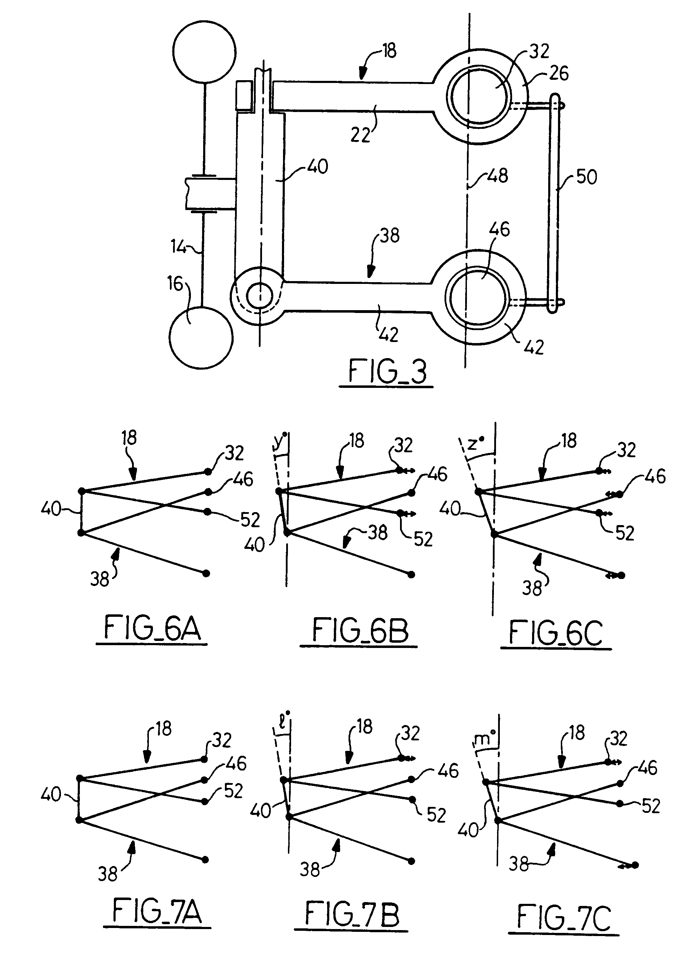

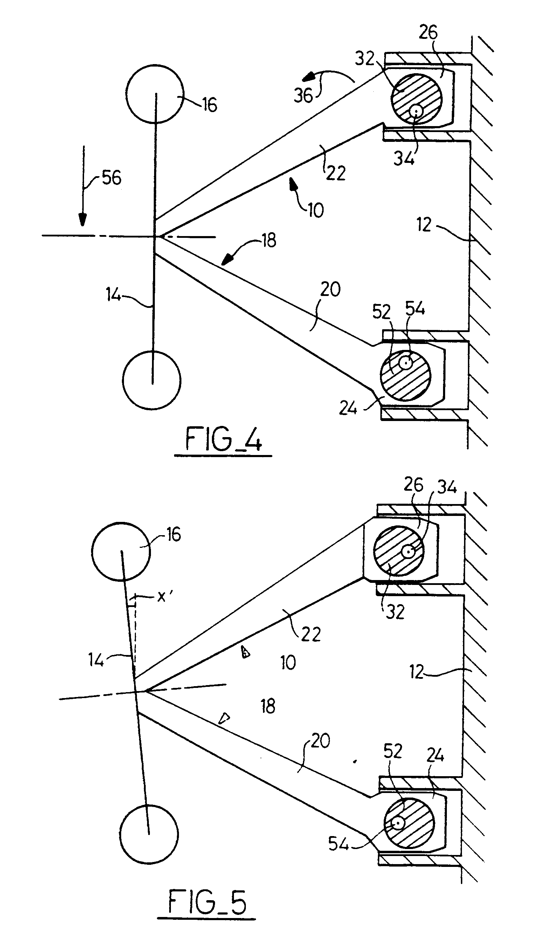

En général un train de suspension d'un véhicule comporte deux triangles de suspension similaires. La figure 3 est une vue prise sensiblement normale au plan de la figure 1 et montrant deux triangles de suspension 18 et 38 qui reçoivent entre leurs extrémités le porte-moyeu 40. Une extrémité 26, 42 d'un bras 22, 44 de chaque triangle de suspension 18 et 38 est munie d'une rotule 32, 46. Les deux rotules 32 et 46 sont montées en rotation autour d'un axe commun 48 et sont reliées par un moyen d'actionnement représenté schématiquement en 50 et susceptible de les faire tourner ensemble dans le même sens. L'actionnement du moyen 50 provoque ainsi une rotation du plan de la roue 14 comme il est montré sur la figure 2. Le moyen d'actionnement 50 est relié mécaniquement à la direction du véhicule (non représentée).

Le train de suspension représenté sur les figures 1 à 3, ne permet qu'un rayon de braquage d'un angle x, qui est fonction des dimensions de la rotule 32. Son mode d'opération nécessite de plus, qu'il y ait une certaine flexibilité dans chaque triangle de suspension 18 et 38. Le mode de réalisation représenté sur les figures 4 et 5 autorise un rayon de braquage plus important et permet d'avoir des triangles de suspension rigides.

Le mode de réalisation de la figure 4 diffère de celui des figures 1 à 3 par le fait que chaque extrémité de chaque triangle de suspension est montée sur le châssis 12 du véhicule par l'intermédiaire d'une rotule associée.

L'extrémité 26 du bras 22 comporte une rotule 32 comme dans le mode de réalisation de la figure 1. De façon analogue l'extrémité 24 du bras 20 est reçue sur une rotule 52 montée fixe sur un axe 54 qui, lui, est monté en rotation sur le châssis du véhicule. Dans le position de repos illustrée avec le plan de la roue 14 parallèle à la direction de marche du véhicule représentée par la flèche 56, chaque rotule 32 et 52 est disposée de façon similaire. Dans cette position les centres des rotules 32 et 52 et ceux des axes 34 et 54 sont alignés.

Quand on désire faire tourner le plan de la roue 14, les deux axes 34 et 54 sont mis en rotation, en sens inverse. L'axe 34 est mis en rotation, par exemple dans le sens inverse des aiguilles d'une montre (en regardant le dessin), et l'axe 54 tourne dans l'autre sens. L'excentricité des deux rotules 32 et 52 provoque le déplacement des extrémités 24 et 26 des bras 20 et 22 à droite et à gauche respectivement (en regardant le dessin). Après que les deux axes 34 et 54 ont décrit tous les deux un angle de 90°, le train de suspension 10 se trouve dans la position représentée sur la figure 5, position dans laquelle le plan de la roue 14 fait un angle de x° avec le plan de la roue représentée sur la figure 5. Comme les deux extrémités 24 et 26 des bras 20 et 22 ont été déplacées, l'angle x' est égale à deux fois l'angle x. Il est clair que l'on peut varier l'angle de rotation du plan de la roue 14 entre O° et l'angle maximum x' représenté sur la figure 5 simplement en variant l'angle de rotation de chacun des axes 34 et 54.

Evidemment, pour tourner le plan de la roue 14 dans le sens inverse il suffit d'inverser les rotations des axes 34 et 54. Il est clair que, dans ce mode de réalisation, l'autre triangle de suspension 38 est muni de deux rotules analogues à celles du triangle 18. Une rotule de chaque triangle est agencée de façon à tourner en même temps et dans le même sens que la rotule associée de l'autre triangle de façon à assurer le changement du rayon de braquage de la roue.

Le dispositif représenté sur les figures 4 et 5 permet, non seulement de faire tourner le plan de la roue 14, mais également de faire varier l'angle de carrossage et l'angle de chasse de la roue. Dans ce cas les rotules sont actionnées séparément.

Par exemple, pour changer l'angle de carrossage de le roue il suffit de tourner les axes 34 et 54 d'un seul triangle de suspension, par exemple supérieur 18, du même angle et dans le même sens. Les deux extrémités 24 et 26 du triangle 18 se déplacent ensemble dans la même direction, à droite ou à gauche en regardant le dessin selon le sens de rotation des axes 34 et 54, et le triangle de suspension 10 se déplace latéralement par rapport au triangle 38 qui reste immobile. Cette position est illustrée sur la figure 6B où le porte-moyeu 40 à pivoté d'un angle y° par rapport à sa position de repos représentée sur la figure 6A. L'angle de carrossage de la roue peut ainsi être modifié dans les limites de l'excentricité des rotules 32 et 52. Si l'on désire modifier l'angle de carrossage de la roue 14 au-délà de ces limites, il suffit de faire tourner ensemble les deux rotules d'un triangle de suspension dans un sens pendant que les deux rotules de l'autre triangle sont mises en rotation ensemble dans le sens inverse. La variation de l'angle de carrossage de la roue est ainsi deux fois celle qui résulte du déplacement d'un seul triangle de suspension. Cette position est illustrée sur la figure 6c où la variation de l'angle de carrossage est de Z°.

De manière analogue, il est permis de varier l'angle de chasse de la roue 14. La position de repos du train de suspension 10 est représentée sur la figure 7A. En faisant tourner l'axe 34 de la rotule 32, tout en gardant les trois autres rotules immobiles, on provoque une variation 1° de l'angle de chasse. Cette position est illustrée sur la figure 7B. Dans certaines conditions, il est souhaitable de modifier l'angle de chasse au-delà des limites représentées sur la figure 7B. Dans ce cas il suffit de tourner la rotule opposée de l'autre triangle de suspension dans le sens inverse pour doubler la variation de l'angle de chasse. Cette position est illustrée sur la figure 7c où la variation de l'angle de chasse est de m°. Il est à noter que la géométrie du train de suspension est telle qu'une variation de l'angle de chasse entraîne une légère variation associée de l'angle de carrossage. De plus, il est clair que l'on peut modifier l'angle de chasse dans le sens opposé à partir de la position de repos en actionnant simplement la ou les rotules opposées.

En décrivant le mode de réalisation de la figure 3, il a été dit que les rotules étaient reliées mécaniquement à la direction du véhicule. Cependant, afin d'assurer un meilleur contrôle de la géométrie du train de suspension, chaque rotule peut être actionnée avantageusement par un moteur électrique associé, de préférence chaque moteur est du type pas-à-pas.

Afin de permettre le contrôle de tous les paramètres de la suspension : rayon de braquage, angle de carrossage et angle de chasse, soit séparément, soit en combinaison, il faut prévoir huit moteurs pas-à-pas similaires, un par rotule, sur les deux roues arrières.

Chaque moteur peut être commandé par une unité centrale électronique munie de capteurs destinés à suivre, par exemple l'état de la direction, l'accélération et l'assiette du véhicule afin de sélectionner la meilleure géométrie des roues arrières du véhicule. Si l'on souhaite seulement contrôler l'angle de braquage des roues, il suffit de prévoir quatre moteurs, chacun relié à deux rotules analogues d'un train de suspension.

On peut également prévoir d'équiper les trains de suspension avant du véhicule avec des dispositifs de la présente invention afin de pouvoir modifier ou corriger la géométrie des roues avant indépendamment de la direction du véhicule.

## Revendications

1. Dispositif de réglage de la géométrie d'une roue (14) de véhicules comprenant un porte-moyeu (40) destiné à recevoir en rotation la roue, le porte-moyeu étant relié à un élément de suspension (18; 38) lui-même relié au véhicule par l'intermédiaire d'un excentrique (32) caractérisé en ce que, afin de pouvoir faire varier le rayon de braquage de la roue, l'axe de l'excentrique est disposé verticalement et est susceptible d'être mis en rotation de manière continue pendant le déplacement du véhicule.

2. Dispositif selon la revendication 1 caractérisé en ce que l'élément de suspension est un triangle de suspension (18 ; 38) monté sur le véhicule en deux endroits (24 ; 26).

3. Dispositif selon la revendication 1 ou 2 caractérisé en ce que le porte-moyeu (40) est monté sur le véhicule par deux triangles de suspension (18 ; 38), chacun des éléments étant monté sur le véhicule par l'intermédiaire d'un excentrique (32 ; 46), les excentriques (32 ; 46) étant susceptibles d'être mis en rotation ensemble pour faire varier au moins un des angles définis entre chaque triangle de suspension et le véhicule.

4. Dispositif selon la revendication 2 ou 3 caractérisé en ce que le ou chaque triangle de suspension (18 ; 38) comporte deux bras (20 ; 22 ; 42), l'extrémité libre de chaque bras étant montée sur le véhicule.

5. Dispositif selon l'une des revendications 1 à 4 caractérisé en ce que le ou chaque excentrique (32 ; 46) comprend une rotule excentrique (32 ; 46) mobile autour d'un axe à partir d'une position de repos, dans un sens ou dans le sens inverse afin de pouvoir varier le rayon de braquage de la roue dans une direction désirée.

6. Dispositif de réglage de la géométrie d'une roue (14) de véhicule comprenant un porte-moyeu (40) destiné à recevoir en rotation la roue, le porte-moyeu étant relié à deux éléments de suspension eux-mêmes reliés au véhicule chacun par l'intermédiaire d'un excentrique (32,46) caractérisé en ce que, afin de pouvoir faire varier au moins deux des paramètres de la géométrie soit séparément soit en combinaison, les axes des excentriques sont disposés verticalement et sont susceptibles d'être mis en rotation de manière continue pendant le déplacement du véhicule.

7. Dispositif selon la revendication 6 caractérisé en ce que chaque élément de suspension est un triangle de suspension (18 ; 38) monté sur le véhicule à deux endroits (24 ; 26 ; 42).

8. Dispositif selon la revendication 7 caractérisé en ce que chaque triangle de suspension comporte deux bras (20 ; 22 ; 42) l'extrémité libre (24 ; 26 ; 42) de chaque bras étant montée sur le véhicule.

9. Dispositif selon la revendication 8 caractérisé en ce que chaque extrémité des bras est montée sur le véhicule par l'intermédiaire d'un excentrique.

10. Dispositif selon le revendication 9 caractérisé en ce que chaque excentrique (32 ; 46 ; 52) est muni d'un moyen d'actionnement destiné à le faire tourner autour d'un axe à partir d'une position de repos, dans un sens ou dans le sens inverse, les excentriques pouvant être mis en rotation soit séparément, soit en combinaison afin de pouvoir varier un ou plusieurs paramètres de la géométrie de la roue.

11. Dispositif selon l'une des revendications 3 à 5 ou 6 à 10 caractérisé en ce qu'il comprend de plus des moyens d'actionnement (50) reliant deux ou plusieurs excentriques.

12. Dispositif selon l'une des revendications 1 à 11 caractérisé en ce que le ou chaque excentrique est relié à la direction du véhicule.

## Patentansprüche

1. Vorrichtung zur Steuerung der Geometrie eines Fahrzeugrades (14), mit einem Nabenträger (40), der zur Aufnahme des Rades während der Drehung bestimmt ist, wobei der Nabenträger mit einem Aufhängungselement (18; 38) verbunden ist, das seinerseits über einen Exzenter (32) mit dem Fahrzeug verbunden ist, dadurch gekennzeichnet, daß die Achse des Exzenters vertikal angeordnet und während der Verschiebung des Fahrzeugs stufenlos in Drehung versetzt werden kann, um den Lenkradius des Rades verändern zu können.

2. Vorrichtung nach Anspruch 1, dadurch gekennzeichnet, daß das Aufhängungselement ein Aufhängungsdreieck (18; 38) ist, das an dem Fahrzeug an zwei Stellen (24; 26) angebracht ist.

3. Vorrichtung nach Anspruch 1 oder 2, dadurch gekennzeichnet, daß der Nabenträger (40) mittels zweier Aufhängungsdreiecke (18; 38) an dem Fahrzeug angebracht ist, wobei jedes Element über einen Exzenter (32; 46) an dem Fahrzeug angebracht ist und die Exzenter (32; 46) zusammen in Drehung versetzt werden können, um wenigstens einen der Winkel zu verändern, die zwischen jedem Aufhängungsdreieck und dem Fahrzeug definiert sind.

4. Vorrichtung nach Anspruch 2 oder 3, dadurch gekennzeichnet, daß das oder jedes Aufhängungsdreieck (18; 38) zwei Arme (20; 22; 42) aufweist, wobei das freie Ende jedes Armes an dem Fahrzeug angebracht ist.

5. Vorrichtung nach einem der Ansprüche 1 bis 4, dadurch gekennzeichnet, daß der oder jeder Exzenter (32; 46) ein exzentrisches Kugelgelenk (32; 46) aufweist, das aus einer Ruhestellung in einer Richtung oder in entgegengesetzter Richtung um eine Achse bewegbar ist, damit der Lenkradius des Rades in einer gewünschten Richtung verändert werden kann.

6. Vorrichtung zur Steuerung der Geometrie eines Fahrzeugrades (14) mit einem Nabenträger (40), der zur Aufnahme des Rades in Drehung bestimmt ist, wobei der Nabenträger mit zwei Aufhängungselementen verbunden ist, die ihrerseits jeweils über einen Exzenter (32, 46) mit dem Fahrzeug verbunden sind, dadurch gekennzeichnet, daß die Exzenterachsen vertikal angeordnet sind und während der Verschiebung des Fahrzeugs stufenlos in Drehung versetzt werden können, um wenigstens zwei der Parameter der Geometrie entweder getrennt oder gemeinsam verändern zu können.

7. Vorrichtung nach Anspruch 6, dadurch gekennzeichnet, daß jedes Aufhängungselement ein Aufhängungsdreieck (18; 38) ist, das an dem Fahrzeug an zwei Stellen (24; 26; 42) angebracht ist.

8. Vorrichtung nach Anspruch 7, dadurch gekennzeichnet, daß jedes Aufhängungsdreieck zwei Arme (20, 22, 42) aufweist, wobei das freie Ende (24, 26, 42) jedes Armes an dem Fahrzeug angebracht ist.

9. Vorrichtung nach Anspruch 8, dadurch gekennzeichnet, daß jedes Ende der Arme über einen Exzenter an dem Fahrzeug angebracht ist.

10. Vorrichtung nach Anspruch 9, dadurch gekennzeichnet, daß jeder Exzenter (32; 46; 52) mit einer Betätigungseinrichtung versehen ist, die dazu bestimmt ist, ihn in eine Richtung oder in die entgegengesetzte Richtung aus einer Ruhestellung um eine Achse zu drehen, wobei die Exzenter entweder getrennt oder zusammen in Drehung versetzt werden können, damit einer oder mehrere Parameter der Geometrie des Rades verändert werden können.

11. Vorrichtung nach einem der Ansprüche 3 bis 5 oder 6 bis 10, gekennzeichnet durch mehrere Betätigungseinrichtungen (50), die zwei oder mehrere Exzenter verbinden.

12. Vorrichtung nach einem der Ansprüche 1 bis 11, dadurch gekennzeichnet, daß der oder jeder Exzenter an die Richtung des Fahrzeugs angeschlossen ist.

## Claims

1. Device for adjusting the geometry of a wheel (14) of a vehicle, comprising a hub-carrier (40) intended to receive the wheel rotatably, the hub-carrier being connected to a suspension component (18; 38) which itself is connected to the vehicle by means of a cam (32), characterised in that, in order to be able to vary the radius of turn of the wheel, the camshaft is disposed vertically and can be rotated continuously when the vehicle is moving.

2. Device according to Claim 1, characterised in that the suspension component is a suspension triangle (18; 38) fitted onto the vehicle in two places (24; 26).

3. Device according to Claim 1 or 2 characterised in that the hub-carrier (40) is fitted onto the vehicle by means of two suspension triangles (18; 38), each of the components being fitted onto the vehicle by means of a cam (32; 46), in such a manner that the cams (32; 46) can be rotated together in order to vary at least one of the angles defined between each suspension triangle and the vehicle.

4. Device according to Claim 2 or 3 characterised in that the suspension triangle or each suspension triangle (18; 38) comprises two arms (20; 22; 42), the free end of each arm being fitted onto the vehicle.

5. Device according to one of Claims 1 to 4, characterised in that the cam or each cam (32; 46) comprises an eccentric tie-rod (32; 46) movable about a shaft starting from a rest position, in a direction or in the inverse direction, in order to be able to vary the radius of turn of the wheel in a required direction.

6. Device for adjusting the geometry of a wheel (14) of a vehicle, comprising a hub-carrier (40) intended to receive the wheel rotatably, the hub-carrier being connected to two suspension components (18; 38) which themselves are each connected to the vehicle by means of a cam (32, 46), characterised in that, in order to be able to vary at least two of the parameters of the geometry either separately or as a combination, the camshafts are disposed vertically and can be rotated continuously when the vehicle is moving.

7. Device according to Claim 6, characterised in that each suspension component is a suspension triangle (18; 38) fitted onto the vehicle in two places (24; 26; 42).

8. Device according to Claim 7 characterised in that each suspension triangle comprises two arms (20; 22; 42), the free end (24; 26; 42) of each arm being fitted onto the vehicle.

9. Device according to Claim 8, characterised in that each end of the arms is fitted onto the vehicle by means of a cam.

10. Device according to Claim 9, characterised in that each cam (32; 46; 52) is provided with activating means intended to rotate it about a shaft, starting from a rest position, in a direction or in the inverse direction, the cams being rotatable either separately or in a combination, in order to be able to vary one or a plurality of parameters of the wheel geometry.

11. Device according to one of Claims 3 to 5 or 6 to 10, characterised in that additionally it comprises activating means (50) which connect two or a plurality of cams.

12. Device according to one of Claims 1 to 11, characterised in that the cam or each cam is, connected to the vehicle steering system.
